# EUROPEAN PATENT SPECIFICATION

(11) **EP 2 582 169 B1**
(45) Date of publication and mention of the grant of the patent: **25.09.2019**
(21) Application number: 10852795.3
(22) Date of filing: 16.12.2010
(51) Int. Cl.: H04W 24/10

(54) **MONITORING SYSTEM FOR MOBILE TERMINAL AND MONITORING METHOD THEREOF**
ÜBERWACHUNGSSYSTEM FÜR MOBILE ENDGERÄTE UND DAZUGEHÖRIGES ÜBERWACHUNGSVERFAHREN
SYSTÈME DE SURVEILLANCE POUR TERMINAL MOBILE ET PROCÉDÉ DE SURVEILLANCE CORRESPONDANT

(30) Priority: 08.06.2010 CN 201010201582
(43) Date of publication of application: 17.04.2013
(73) Proprietor: Huizhou TCL Mobile Communication Co., Ltd., Huizhou, Guangdong 516006 (CN)
(72) Inventor: ZHAO, Hai, Huizhou Guangdong 516006 (CN)
(74) Representative: ZHAOffice SPRL
(86) International application number: PCT/CN2010/079903
(87) International publication number: WO 2011/153805

(56) References cited:
- WO-A1-2009/138555
- CN-A- 101 227 339
- CN-A- 101 247 609
- CN-A- 101 472 021
- US-A1- 2002 173 907
- US-A1- 2003 217 150
- US-A1- 2006 030 339
- US-B1- 6 553 336
- US-B2- 7 353 034

## Description

### FIELD OF THE INVENTION

The present disclosure generally relates to the technical field of mobile phone monitoring, and more particularly, to a monitoring system for a mobile terminal and a monitoring method thereof.

### BACKGROUND OF THE INVENTION

As a kind of means of communication, communication terminals have brought about great convenience to people's life. Nowadays, more and more students are using mobile phones as a means of communication and, meanwhile, more and more students try to make phone calls, send short messages, chat online, play games and so on in class hours, which has adversely affected the students' study. However, because there is still no effective measure to restrict use of the communication terminals, it is impossible for parents or teachers to monitor or keep track of use of the communication terminals of the students. Consequently, abuse of the communication terminals may make an adverse impact on the students' life. Accordingly, an urgent need exists in the art to develop a monitoring system for a mobile terminal. Each of US 2002/173907 A1 and US 2006/030339 A1 discloses a monitoring system for a mobile terminal, comprising: a monitoring mobile terminal, being configured to send monitoring request information; and a monitored mobile terminal, being configured to receive the monitoring request information and send a corresponding monitoring report to the monitoring mobile terminal according to the monitoring request information, the monitoring mobile terminal and the monitored mobile terminal are connected wirelessly.

### SUMMARY OF THE INVENTION

A primary objective of the present disclosure is to provide a monitoring system for a mobile terminal and a monitoring method thereof that can obtain using conditions of a monitored mobile terminal at any time and at any place.

To achieve the aforesaid objective, the present disclosure provides the following technical solutions.

The present disclosure provides a monitoring system for a mobile terminal, which comprises:
a monitoring mobile terminal, being configured to send monitoring request information; and
a monitored mobile terminal, being configured to receive the monitoring request information and send a corresponding monitoring report to the monitoring mobile terminal according to the monitoring request information,
the monitoring mobile terminal and the monitored mobile terminal are connected wirelessly;
the monitored mobile terminal comprises:
   an MSM (Monitored Software Module) module, being configured to set a sending format and a sending time of the monitoring report; and
   an SSM (Supervising Software Module) module, being configured to modify the setting functions of the MSM module;
the monitored mobile terminal is also configured to send the monitoring report periodically;
the monitoring mobile terminal comprises:
   an MSM (Monitored Software Module) module, being configured to set a sending format and a sending time of the monitoring report; and
   an SSM (Supervising Software Module) module, being configured to modify the setting functions of the MSM module;
the monitoring mobile terminal and the monitored mobile terminal are configured to monitor each other. The monitoring mobile terminal is further configured to send to the monitored mobile terminal modification information for modifying the sending format and the sending time of the monitoring report; and the monitored mobile terminal is further configured to feed back an information report about whether the modification is successful to the monitoring mobile terminal according to the modification information.

Preferably in the monitoring system, the MSM module comprises:
a password control unit, being configured to set a mobile phone number or password of the monitoring mobile terminal; and
a password identifying unit, being configured to identify the mobile phone number or password.

Preferably in the monitoring system, the monitoring report includes one or more of a calling party's phone number, a call duration, a short message record, a QQ chat log, a website and a networking times.

Because the monitoring mobile terminal is configured to send monitoring request information and the monitored mobile terminal is configured to receive the monitoring request information and send a corresponding monitoring report to the monitoring mobile terminal according to the monitoring request information, the monitoring system for a mobile terminal and the monitoring method thereof according to the present disclosure allow a monitor to know using conditions of the monitored mobile terminal at any time and at any place. Therefore, the monitoring system for a mobile terminal and the monitoring method thereof according to the present disclosure are simple to operate and convenient to use.

### BRIEF DESCRIPTION OF THE DRAWINGS

In order to more clearly describe the technical solutions of the embodiments of the present disclosure, attached drawings to be used in the detailed description of the disclosure will be briefly described hereinbelow. Obviously, the attached drawings described hereinbelow only illustrate some of the embodiments of the present disclosure, and those of ordinary skill in the art can also obtain other attached drawings therefrom without the need of making inventive efforts, wherein:
FIG. 1 is a block diagram illustrating a structure of a monitoring system for a mobile terminal according to the present disclosure.
FIG. 2 is a schematic structural view of the monitoring system for a mobile terminal according to an embodiment of the present disclosure.
FIG. 3 is a flowchart diagram of a monitoring method for the monitoring system according to the present disclosure.

### DETAILED DESCRIPTION OF THE INVENTION

The present invention is further described in detail below with reference to the accompanying drawings and embodiments.

The present disclosure provides a monitoring system for a mobile terminal and a monitoring method thereof, which can be used by parents to monitor use of mobile phones of students and can also be used by companies to monitor businesses of employees. The monitoring system for a mobile terminal and the monitoring method thereof are simple to operate and convenient to use.

In order to make objectives, technical solutions and advantages of the present disclosure more apparent and obvious, embodiments of the present disclosure will be further detailed hereinbelow with reference to the attached drawings. However, it shall be appreciated that, the embodiments described herein are only intended to illustrate but not to limit the present disclosure.

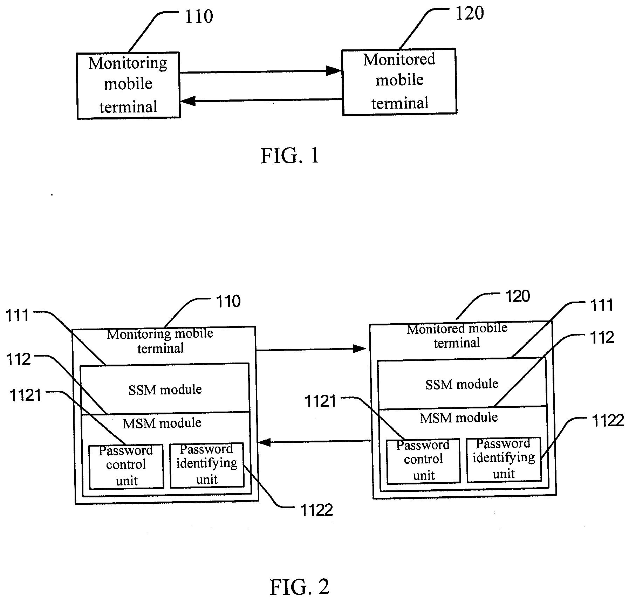

Referring to FIG. 1, the monitoring system for a mobile terminal of the present disclosure comprises a monitoring mobile terminal 110 and at least one monitored mobile terminal 120. The monitoring mobile terminal 110 is wirelessly connected to the monitored mobile terminal 120, and is configured to send monitoring request information to the monitored mobile terminal 120. There may be more than two monitored mobile terminals 120 configured to receive the monitoring request information from the monitoring mobile terminal 110 and send a corresponding monitoring report according to the monitoring request information.

The monitoring report includes one or more of a calling party's phone number, a call duration, a short message record, a QQ chat log, a website and a networking times.

Referring to FIG. 2 together, the monitored mobile terminal 120 comprises an SSM (Supervising Software Module) module 111 and an MSM (Monitored Software Module) module 112. The MSM module 112 is configured to set a sending format and a sending time of the monitoring report; and the SSM module 110 is configured to modify the setting functions of the MSM module.

The MSM module 112 comprises a password control unit 1121 and a password identifying unit 1122. The password control unit 1121 is configured to set a mobile phone number or password of the monitoring mobile terminal; and the password identifying unit 1122 is configured to identify the mobile phone number or password.

The monitoring manner of this embodiment is an on demand (OD) monitoring manner. Of course, in other embodiments, other monitoring manners may also be used. For example, a user may set in the MSM module 112 arbitrarily a time interval at which the monitoring report is sent, so the monitored mobile terminal 120 can send the monitoring report to the monitoring mobile terminal 110 periodically without the need of sending the monitoring request information by the monitoring mobile terminal any longer.

In the monitoring system of the present disclosure, a monitor can use an existing mobile terminal while a monitored person can use the monitored mobile terminal of the present disclosure. The monitoring function of this system can be accomplished by simply setting a mobile phone number or password of the monitor in the monitored mobile terminal prior to use.

Of course, the monitoring mobile terminal in the present disclosure may also be used as a monitored mobile terminal instead; and the function of monitoring the monitoring mobile terminal can be accomplished by simply disposing an MSM module 112 and an SSM module 111 in the monitoring mobile terminal. Thus, the monitoring mobile terminal and the monitored mobile terminal can monitor each other, and both the monitor and the monitored person can know using conditions of each other's mobile terminal.

In a further embodiment, the monitoring mobile terminal is also configured to send to the monitored mobile terminal modification information for modifying the sending format and the sending time of the monitoring report as well as modification information for modifying the mobile phone number and the password of the monitoring mobile terminal; and the monitored mobile terminal is also configured to feed back an information report about whether the modification is successful to the monitoring mobile terminal according to the modification information.

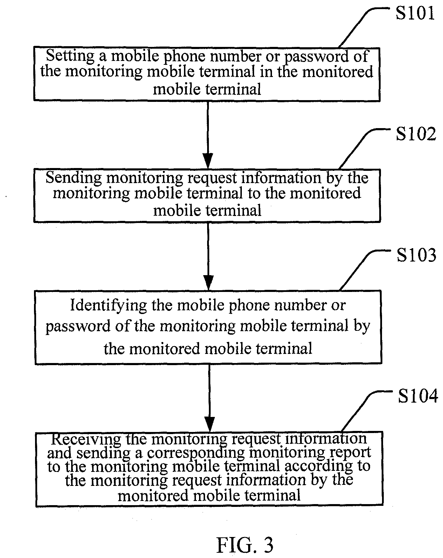

On the basis of the aforesaid monitoring system for a mobile terminal, an embodiment of the present disclosure further provides a monitoring method for the monitoring system correspondingly. Referring to FIG. 3, the monitoring method comprises the following steps of:
S101: setting a mobile phone number or password of the monitoring mobile terminal in the monitored mobile terminal;
S102: sending monitoring request information by the monitoring mobile terminal to the monitored mobile terminal;
S103: identifying the mobile phone number or password of the monitoring mobile terminal by the monitored mobile terminal; and
S104: receiving the monitoring request information and sending a corresponding monitoring report to the monitoring mobile terminal according to the monitoring request information by the monitored mobile terminal, wherein the monitoring report is sent to the monitoring mobile terminal in the form of a short message.

Because the monitoring mobile terminal is configured to send monitoring request information and the monitored mobile terminal is configured to receive the monitoring request information and send a corresponding monitoring report to the monitoring mobile terminal according to the monitoring request information, the monitoring system for a mobile terminal and the monitoring method thereof according to the present disclosure allow a monitor to know using conditions of the monitored mobile terminal at any time and at any place. Moreover, the monitor only needs to use an existing mobile terminal and a monitored person can use the monitored mobile terminal of the present disclosure, and then the monitoring function of this system can be accomplished by simply setting a mobile phone number or password of the monitor in the monitored mobile terminal. Therefore, the monitoring system for a mobile terminal and the monitoring method thereof according to the present disclosure are simple to operate and convenient to use.

## Claims

1. A monitoring system for a mobile terminal, comprising:
a monitoring mobile terminal (110), being configured to send monitoring request information; and
a monitored mobile terminal (120), being configured to receive the monitoring request information and send a corresponding monitoring report to the monitoring mobile terminal (110) according to the monitoring request information,
the monitoring mobile terminal (110) and the monitored mobile terminal (120) are connected wirelessly;
the monitored mobile terminal (120) comprises:
an Monitored Software Module, MSM, module (112), being configured to set a sending format and a sending time of the monitoring report; and
an Supervising Software Module, SSM, module (111), being configured to modify the setting functions of the MSM module (112);
the monitored mobile terminal (120) is also configured to send the monitoring report periodically;
the monitoring mobile terminal (110) comprises:
an MSM module (112), being configured to set a sending format and a sending time of the monitoring report; and
an SSM module (111), being configured to modify the setting functions of the MSM module (112);
the monitoring mobile terminal (110) and the monitored mobile terminal (120) are configured to monitor each other, the monitoring mobile terminal is further configured to send to the monitored mobile terminal modification information for modifying the sending format and the sending time of the monitoring report; and the monitored mobile terminal is further configured to feed back an information report about whether the modification is successful to the monitoring mobile terminal according to the modification information.

2. The monitoring system for a mobile terminal of claim 1, wherein the MSM module (112) comprises:
a password control unit (1121), being configured to set a mobile phone number or password of the monitoring mobile terminal (110); and
a password identifying unit (1122), being configured to identify the mobile phone number or password.

3. The monitoring system for a mobile terminal of claim 1, wherein the monitoring report includes one or more of a calling party's phone number, a call duration, a short message record, a QQ chat log, a website and a networking times.

## Patentansprüche

1. Überwachungssystem für ein mobiles Endgerät, umfassend:
ein mobiles Überwachungsendgerät (110), das zum Senden von Überwachungsanfrageinformationen konfiguriert ist; und
ein überwachtes mobiles Endgerät (120), das zum Empfängst der Überwachungsanfrageinformationen und zum Senden eines entsprechenden Überwachungsberichtes an das mobile Überwachungsendgerät (110) gemäß den Überwachungsanfrageinformationen konfiguriert ist,
wobei das mobile Überwachungsendgerät (110) und das überwachte mobile Endgerät (120) drahtlos verbunden sind;
wobei das überwachte mobile Endgerät (120) umfasst:
ein überwachtes Softwaremodul MSM (112), das zur Einstellung eines Sendeformats und einer Sendezeit des Überwachungsberichtes konfiguriert ist.
ein Aufsichtssoftwaremodul SSM (111), das zur Änderung der Einstellungsfunktionen des MSM-Moduls (112) konfiguriert ist;
wobei das überwachte mobile Endgerät (120) auch zum periodischen Senden des entsprechenden Überwachungsberichtes konfiguriert ist;
wobei das mobile Überwachungsendgerät (110) umfasst:
ein MSM-Modul (112), das zur Einstellung eines Sendeformats und einer Sendezeit des Überwachungsberichtes konfiguriert ist.
ein SSM-Modul (111), das zur Änderung der Einstellungsfunktionen des MSM-Moduls (112) konfiguriert ist;
wobei das mobiles Überwachungsendgerät (110) und das überwachte mobile Endgerät (120) zur gegenseitigen Überwachung konfiguriert sind, das mobile Überwachungsendgerät (110) weiter zum Senden von Änderungsinformationen zur Änderung des Sendeformats und der Sendezeit des Überwachungsberichtes an das überwachte mobile Endgerät konfiguriert ist; und das überwachte mobile Endgerät weiter zur Rückmeldung eines Informationsberichtes, ob die Änderung erfolgreich ist, an das mobile Überwachungsendgerät gemäß den Änderungsinformationen konfiguriert ist.

2. Überwachungssystem für ein mobiles Endgerät nach Anspruch 1, wobei das MSM-Modul (112) umfasst:
eine Passwortkontrolleinheit (1121), das zur Einstellung einer Mobiltelefonnummer oder Passwortes des mobilen Überwachungsendgeräts (110) konfiguriert ist; und
eine Passwortidentifikationseinheit (1122), das zur Identifizierung der Mobiltelefonnummer oder des Passwortes konfiguriert ist.

3. Überwachungssystem für ein mobiles Endgerät nach Anspruch 1, wobei der Überwachungsbericht eine oder mehrere Informationen der Telefonnummer einer anrufenden Partei, einer Anrufdauer, einer Kurznachrichtspeicherung, eines QQ-Chat-Protokolls, einer Webseite und einer Vernetzungszeit umfasst.

## Revendications

1. Système de surveillance pour un terminal mobile, comprenant:
un terminal mobile de surveillance (110) qui est configuré pour émettre des informations de demande de surveillance; et
un terminal mobile surveillé (120) qui est configuré pour recevoir les informations de demande de surveillance et pour émettre un rapport de surveillance correspondant au terminal mobile de surveillance (110) selon les informations de demande de surveillance,
le terminal mobile de surveillance (110) et le terminal mobile surveillé (120) étant connectés sans fil;
le terminal mobile surveillé (120) comprenant:
un module logiciel surveillé MSM (112) qui est configuré pour régler un format d'émission et un temps d'émission du rapport de surveillance; et
un module logiciel de supervision SSM (111) qui est configuré pour modifier les fonctions de réglage du module MSM (112);
le terminal mobile surveillé (120) étant aussi configuré pour émettre périodiquement le rapport de surveillance;
le terminal mobile de surveillance (110) comprenant:
un module MSM (112) qui est configuré pour régler un format d'émission et un temps d'émission du rapport de surveillance; et
un module SSM (111) qui est configuré pour modifier les fonctions de réglage du module MSM (112);
système dans lequel le terminal mobile de surveillance (110) et le terminal mobile surveillé (120) sont configurés pour se surveiller l'un l'autre, le terminal mobile de surveillance est en outre configuré pour émettre vers le terminal mobile surveillé des informations de modification afin de modifier le format d'émission et le temps d'émission du rapport de surveillance; et le terminal mobile surveillé est en outre configuré pour renvoyer un rapport d'informations quant à savoir si la modification est réussie, au terminal mobile de surveillance selon les informations de modification.

2. Système de surveillance pour un terminal mobile selon la revendication 1, dans lequel le module MSM (112) comprend;
une unité de réglage de mot de passe (1121) qui est configurée pour régler un numéro de téléphone mobile ou mot de passe du terminal mobile de surveillance (110); et
une unité d'identification de lot de passe (1122) qui est configurée pour identifier le numéro de téléphone mobile ou mot de passe.

3. Système de surveillance pour un terminal mobile selon la revendication 1, dans lequel le rapport de surveillance inclut l'une ou plusieurs informations parmi un numéro de téléphone de la partie appelante, une durée d'appel, un enregistrement de messages brefs, un registre de discussion QQ, un site web et des temps de réseautage.
